# EUROPÄISCHE PATENTSCHRIFT

(11) **EP 1 820 902 B1**
(45) Veröffentlichungstag und Bekanntmachung des Hinweises auf die Patenterteilung: **08.06.2011**
(21) Anmeldenummer: 07003418.6
(22) Anmeldetag: 19.02.2007
(51) Int. Cl.: E01B 31/13

(54) **Verfahrbare Vorrichtung zum Fräsen von Schienenköpfen**
Travelling device for milling rail heads
Dispositif mobile pour fraiser des champignons de rails

(30) Priorität: 20.02.2006 DE 102006008093
(43) Veröffentlichungstag der Anmeldung: 22.08.2007
(60) Teilanmeldung: 11003452.7
(73) Patentinhaber: Linsinger Maschinenbau Gesellschaft m.b.H., 4662 Steyrermühl (AT)
(72) Erfinder: Neubauer, Walter, Dipl.-Ing., 4694 Ohlsdorf (AT); Knoll, Johann, Dipl.-Ing., 4861 Schörfling (AT)
(74) Vertreter: Pausch, Thomas Ernst

(56) Entgegenhaltungen:
- CH-A5- 693 960
- DE-A1- 3 222 208
- DE-B- 1 235 710
- GB-A- 2 205 061
- "Bahn frei für Linsinger" GEWINN, WAILAND UND WALDSTEIN, AT, 1 October 2004 (2004-10-01), pages 132-134, XP003025490
- ANONYMOUS: 'Die SchienenfrÃ smaschine SF03-FFS Reprofilierung und Schleifen des Schienenprofils in einmen Arbeitsgang' ALPHA RAIL TEAM Seiten 1 - 4, XP003025492
- BARTMANN H.-P.: 'Das Schienenbearbeitungssystem der Zukunft' EISENBAHNINGENIEUR, TETZLAFF, HAMBURG, DE Bd. 55, 01 September 2004, Seiten 68 - 72, XP003025491 ISSN: 0013-2810
- ANONYMOUS: 'SchienenfrÃ szug SF03-FFS Ã 1/4 bernommen' EISENBAHNINGENIEUR, TETZLAFF, HAMBURG, DE Bd. 55, 01 Juni 2004, Seite 90, XP003025489 ISSN: 0013-2810

## Beschreibung

Die Erfindung betrifft ein Verfahren zum Fräsen von Schienenköpfen der in einer Bettung angeordneten Gleisschienen nach dem Oberbegriff der Ansprüche 1, 2 und 3.

Ein derartiges Verfahren ist aus der DE 32 22 208 PS desselben Patentanmelders bekannt. Dieses Dokument beschreibt auch eine Vorrichtung, um das Verfahren auszuführen. Die Vorrichtung hat einen rotierend angetriebenen Fräsmesserkcpf, der in einem einen Fräsmesserkopfantrieb enthaltenden Fahrwerk gelagert und mit Mitteln zur Führung des Fräsmesserkopfes der Höhe und/oder der Seite nach zusammenwirkt, wobei der Fräsmesserkopf einen Satz von Messerkopfschneiden zum Fräsen der Schienenköpfe aufweist, deren Profil sich aus annähernd kreisförmigen Teilbögen verschiedener Radien zusammensetzt, wobei jeder Teilbogen auf der Lauffläche der Gleischiene eine Spur bildet, und der Fräsmesserkopf so viele Schneiden aufweist, wie Teilbögen bzw. Spuren des jeweiligen Schienenkopfes zu fräsen sind. Der mehrspurige Fräsmesserkopf nach der bekannten Vorrichtung weist nebeneinander mehrere geradlinige Schneidelemente auf, die der Kontur des Schienenkopfes angepasst sind und die Bearbeitung der gesamten Kontur in einem Arbeitsgang ermöglichen. Die Schneiden sind vorzugsweise als Wendeplatten ausgebildet, und sind im Fräsmesserkopf festgeklemmt, wobei die Schneiden auch als gelötete Profilmesser ausgebildet sein können, deren Schaft ebenfalls im Fräsmesserkopf geklemmt wird. Die vorbekannte Vorrichtung hat sich zum Fräsen von Schienenköpfen gegenüber dem früher praktizierten Schienenhobeln, bereits wegen der deutlich geringeren Stillzeiten bei Durchführung der Schienenbearbeutung sehr bewährt. Allerdings ist auch bei der bewährten Fräsvorrichtung zumeist noch ein weiterer Arbeitsschritt des Schienenschleifens erforderlich, um eine weitere Glättung des Fräsprofiles im Sinne einer Wiederherstellung des Schienenprofiles zu erzielen. Beim Fräsen der Gleisschienen mit der vorbekannten Vorrichtung entstehen in den einzelnen Frässpuren sogenannte Fräswellungen, d.h. periodische Muster von in Fahrtrichtung abwechselnden Erhöhungen und Vertiefungen, welche zwar kaum sichtbar sind, aber dennoch beseitigt werden müssen, und zwar eben durch einen zusätzlichen Schleifschritt. Es hat sich durch Messungen belegte Untersuchungen herausgestellt, dass diese Fräswellungen, wenn sie nicht beseitigt werden, einen signifikanten Effekt auf die Lärmbelastung der auf den Schienen fahrenden Eisenbahn hat. Insbesondere wurde herausgefunden, dass die Form und Anordnung und ggf. die Periodenlänge dieser Wellungen eine messbare Wirkung auf die schallabgebenden Eigenschaften der Gleisschienen haben.

Ausgehend vom Stand der Technik gemäß der DE 32 22 208 PS liegt der Erfindung die Aufgabe zugrunde, ein gattungsgemäßes Verfahren zum Fräsen von Schienenköpfen bei Schienen von in einer Bettung angeordneten Geleisen zur Verfügung zu stellen, welche die Bearbeitung der Geleise in nur einem Arbeitsschritt, jedenfalls ohne wesentliche Aufwandssteigerung, d.h. im wesentlichen ohne einen zusätzlichen Schleifbearbeitungsschritt zur Erzeugung signifikant, messbar lärmärmerer Schienen ermöglicht.

Diese Aufgabe wird durch das im Anspruch 1, 2 und 3 angegebene Verfahren gelöst.

Erfindungsgemäß ist ein Verfahren zum Fräsen von Schienenköpfen der in einer Bettung angeordneten Gleisschienen vorgesehen, mit einem rotierend angetriebenen Fräsmesserkopf, der in einem einen Fräsmesserkopfantrieb enthaltenden Fahrwerk gelagert und mit Mitteln zur Führung des Fräsmesserkopfes der Höhe und/oder der Seite nach zusammenwirkt, wobei der Fräsmesserkopf einen Satz von Messerkopfschneiden zum Fräsen der Schienenköpfe aufweist, deren Profil sich aus annähernd kreisförmigen Teilbögen verschiedener Radien zusammensetzt, wobei jeder Teilbogen auf der Lauffläche der Gleischiene eine Spur bildet, und der Fräsmesserkopf so viele Schneiden aufweist, wie Teilbögen bzw. Spuren des jeweiligen Schienenkopfes zu fräsen sind. Die Erfindung zeichnet sich dadurch aus, dass die jeweils einer bestimmten Spur des Schienenkopfprofiles zugeordneten Messerkopfschneiden dergestalt unter vorbestimmten Neigungen und/oder seitlich und/oder der Höhe nach zueinander versetzt auf dem Fräsmesserkopf angeordnet sind, dass die Fräswellung einer bestimm-Len Spur gegenüber der Fräswellung einer benachbarten Spur entweder phasenversetzt ist und/oder die Fräswellung eine andere mittlere Wellenlänge aufweist und/oder die Fräswellung in ihrer Laufrichtung um einen vorbestimmten Anstellwinkel schräg ausgebildet ist.

Mit der Erfindung gelingt die Bearbeitung der Geleise in nur einem Arbeitsschritt durch Fräsen, d.h. ohne einem zusätzlichen zeit- und arbeitsaufwändigcn weiteren Schleifbearbeitungsschritt zur Erzeugung signifikant, nämlich messbar lärmärmerer Schienen.

Nach Schallmessungen hat sich überraschenderweise herausgestellt, dass die von Eisenbahngeleisen verursachten Larmemmissionen bereits dadurch signifikant vermindert werden können, wenn bereits Fräswellungen einer einzigen Spur gegenüber der Fräswellung einer benachbarten Spur entweder phasenversetzt und/oder eine andere Neigung ("Anstellwinkel') gegenüber dem Verlauf der anderen Spuren hat. Deshalb kann es nach der Erfindung ausreichend sein, dass der Anstellwinkel der Fräswellung für wenigstens eine einzelne Spur in einer anderen Richtung gegenüber dem Anstellwinkel einer anderen Spur verläuft. Andererseits kann es genügen, wenn der Phasenversatz der Fräswellungen zweier benachbarter Spuren einen wenn auch nur geringen Wert hat, wobei die halbe Wellenlänge der Fräswellung einer Spur etwa 2 bis 3 mm, insbesondere etwa 2,5 mm beträgt, und die Amplitude der Wellung einer Spur kleiner oder gleich ist als etwa 0,002 mm (2 µm), und insbesondere kleiner oder gleich ist als etwa 0,001 mm (1 µm). Im Falle von schräg verlaufenden Wellungen bezieht sich der Begriff Wellenlänge auf den durch die Mitte einer Wellung gemessenen Mittelwert. In jedem Fall ist von Vorteil vorgesehen, dass die Wellenlänge der Fräswellung einer Spur kleiner oder gleich ist zum kleineren Durchmesser der Berührlinse einer auf den Schienen fahrenden Zugmaschine. Als theoretisch denkbarer Grund der bislang nur experimentell nachgewiesenen erheblichen Verminderung der Geräuschemission bei den nach der Erfindung gefrästen Schienen dürfte vermutlich darin liegen, dass die sogenannte Berührlinse, also die auf den Schienen beim Darüberfahren der Zugmaschine auf dem Gleis lastenden Rerührpunktgeometrie mit typischen Flächenausdehnungen von etwa 1/2 cm² in ihren Ausdehnungen in etwa vergleichbare Dimensionen hat bzw. sogar einiges größer ist als eine halbe Wellenlänge der durch die Fräsung ausgebildeten Wellung. Im Ergebnis wird vermutlich ein Hereinfallen des Radauflagepunktes in ein Wellental vermieden.

Dem Prinzip der Erfindung folgend ist daher von Vorteil vorgesehen, wenn die Wellenlänge der Fräswellung einer Spur kleiner oder gleich ist zum kleinerer Durchmesser der Berührlinse einer auf den Schienen fahrenden Zugmaschine.

Bei einer bevorzugten Ausführung der Erfindung beträgt der Anstellwinkel der Fräswellung für wenigstens eine einzelne Spur mindestens etwa 10° bis 15°. Bei einer vorteilhaften Ausführung der Erfindung werden solche Anstellwinkel der Fräswellung dadurch erreicht, dass die den einzelenen Spuren zugeordneten Messerschneiden unter einem Sitzwinkel von 10° bis etwa 45° gegenüber Radachsenrichtunq in den Sitzen des Fräsmesserkopfes angeordnet sind. Bei einer konstruktiv vorteilhaften Ausführung beträgt der Sitzwinkel der randseitigen ersten Spur etwa 15°, der Sitzwinkel der sich daran anschlie-βenden zweiten Spur etwa 30°, und so weiter bis zu einem Sitzwinkel von etwa 45° bei der dritten und/oder vierten Spur.

Bei einer weiterhin bevorzugten Ausführung der Erfindung können die den jeweils unterschiedlichen Spuren des Schienenkopfprofiles zugordneten Messerkopfschneiden darüber hinaus seitlich versetzt zueinander auf dem Fräsmesserkopf angeordnet sein.

Vorzugsweise sind als Messerkopfschneiden auswechselbare Wendeschneideplatten vorgesehen, wobei die Wendeschneideplatten insbesondere eine annähernd viereckige, insbesondere quadratische Grundfläche haben, und im Fräsmesserkopf entsprechend ausgebildete Sitze zur Aufnahme der Schnittkräfte ausgebildet sind.

Als weitere wichtige Vorteile der Erfindung haben sich herausgestellt, dass die erfindungsgemäße Fräsvorrichtung auch bei leichteren (preiswerteren) Maschinen (Fahrzeugen) viel ruhiger läuft, als gegenüber vorbekannten Vorrichtungen, bei denen ein Fräsen mit hohen Leistungen normalerweise nur bei schweren Maschinen möglich ist. Darüber hinaus ergibt die erfindungsgemäße Schneidplattenlage einen sogenannten "ziehenden Schnitt", mit dem Vorteil einer generellen Standzeiterhöhung, was insbesondere bei harten, zähen Manganschienen noch wichtiger ist. Ein "ziehender Schnitt" reduziert Schnittkärfte, damit sind negative Schneidplatten möglich, wodurch wiederum eine doppelte Anzahl von Schneidkanten/Schneidplatten zur Verfügung stehen kann. Ausserdem erleichtert die erfindungsgemäße Schienenfräsvorrichtung die Anforderungen an die Vorschubeinrichtnng.

Weitere Vorteile, Zweckmäßigkeiten und Weiterbildungen der Erfindung ergeben sich aus den weiteren Unteransprüchen.

Weitere Einzelheiten ergeben sich aus der nachfolgenden Beschreibung eines AusfÜhrungsbeispieles anhand der Zeichnung.

Es zeigt:
- Fig. 1: schematisch eine Längsseiten-Ansicht einer erfindungsgemäßen Vorrichtung;
- Fig. 2: eine Stirnansicht einer Vorrichtung nach Fig. 1;
- Fig. 3: eine schematische Draufsicht auf eine Vorrichtung gemäß Fig. 1 und 2;
- Fig. 4A,: 4B in schematischer Ansicht die Anordnung von schneidelementen auf einem Messerkopf zur Erläuterung der Erfindung;
- Fig. 4C: in schematischer Daraufsicht das Fräswellenbild einer nach der Erfindung gefrästen Gleisschiene;
- Fig. 5: in schematischer Ansicht die Anordnung von Schneidelementen auf einem Messerkopf nach einem Ausführungsbeispiel der Erfindung;
- Fig. 6: aus zwei verschiedenen Blickrichtungen aufgenommene perspektivische Halbansichten des die Fräsmesser tragenden Rades bei einer erfindungsgemäßen Vorrichtung nach dem Ausführungsbeispiel; und
- Fig. 7: eine aus Fig. 6 genommene Einzelheit "X" in vergrößerter Darstellung.

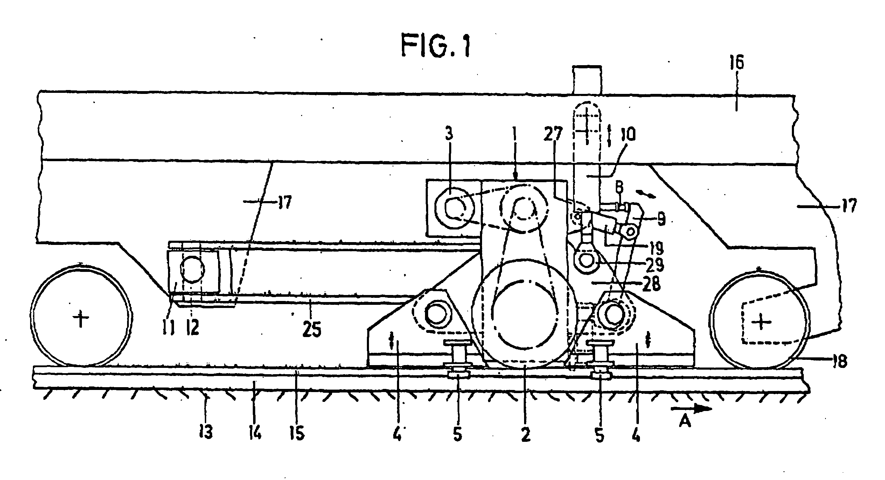

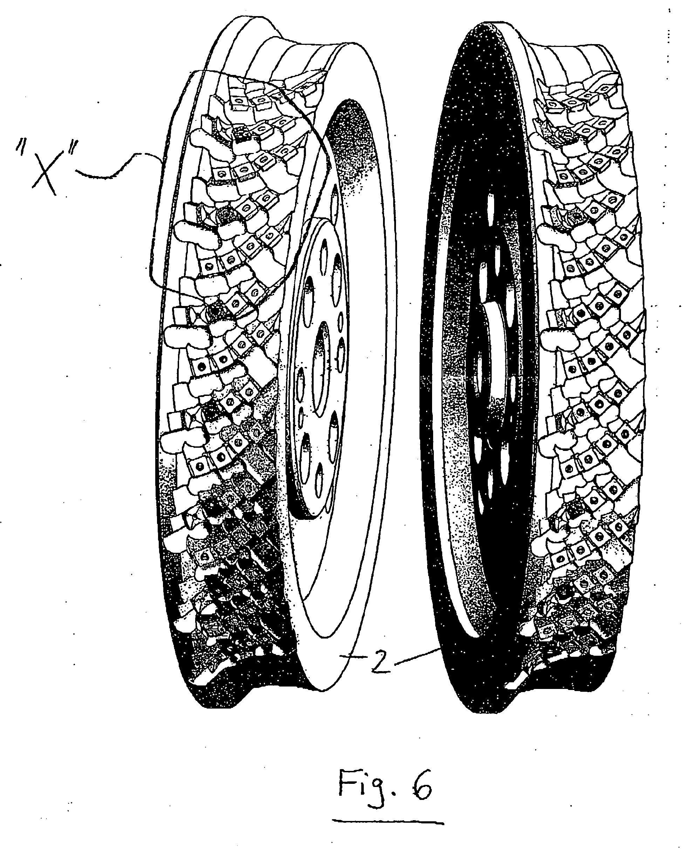

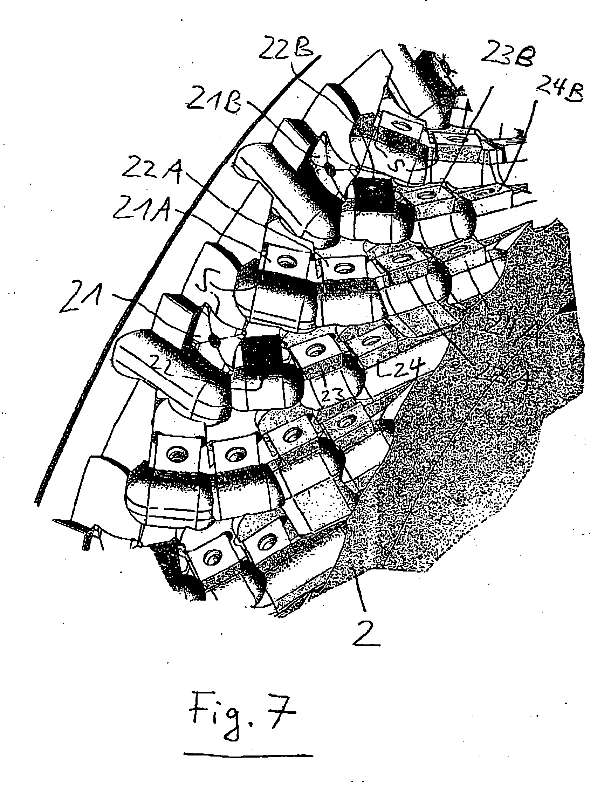

Bei dem in den Figuren 1 bis 7 dargestellten bevorzugten Ausführungsbeispiel einer erfinäunqsgemäßen Vorrichtung ist diese an einem Fahrgestellrahmen 16 eines Fahrgestelles bzw. Fahrzeuges 17 mit wechselseitigen oder paarweise angeordneten Rädern 18 angeordnet. Eine Fräsereinheit besteht aus einem Fräsergehäuse 1, im dem über entsprechende Antriebsmittel ein von einem Fräserkopfantriebsmotor 3 angetriebener mehrspuriger Fräsmesserkopf 2 angeordnet ist. In Fährtrichtung A vor und hinter der Fräsereinheit sind höhenverstellbar Gleitschuhe 4 vorgesehen, die sich bei bestimmten Betriebsbedingungen auf einen Schienenkopf 15 einer Schiene 14 eines in einer Bettung 13 angeordneten Geleises auflegen bzw. abstützen. Seitlich zum Messerkopf 2 bzw. seitlich der Gleitschuhe 4 sind ferner Führungsrollen 5 vorgesehen, die sich entsprechend an den jeweiligen Schienenkopf 15 anlegen oder anpressen. Zur Höhenverstellung der Gleitschuhe 4, relativ zum Fräsmesserkopf 2, wodurch die Schnitt-Tiefe einstellbar ist, dient eine Schnitt-Tiefeneinstcllvorrichtung 8, die mit einer Schnitttiefenexzenterverstellung 9 zusammenwirkt und mittels eines Zylinders 19 betätigbar ist. Der Zylinder 19 ist verschwenkbar an einer Lasche 27 des Fräsergehäuses 1 angebracht. Am Fahrgestellrahmen 16 greift ein Hubzylinder 10 an, der zur Schnittdruckaufbringung dient und in normalem Fahrbetrieb, d.h. ohne Bearbeitung von Schienen, die Fräsereinheit von der Schiene abliebt. Dabei greift vorzugsweise eine Zylinderstange 29 an einem Tragblech 28 des Fräsergehäuses 1 an. Die Fäsereinheit ist an einem Träger 25 bzw. 26 befestigt, der über Gelenkzapfen 12 mit einem Schwenkbalken 11 des Fahrzeugrahmens verbunden ist. Dadurch ist es möglich, dass die Fxä3ereinheit auch bei Kurvenfahrten, wenn sich das Fahrwerk 17, 18 auf einer Sehne zur Kurve bewegt, stets an der zugeordneten Schiene an bzw. auf ihr aufliegt.

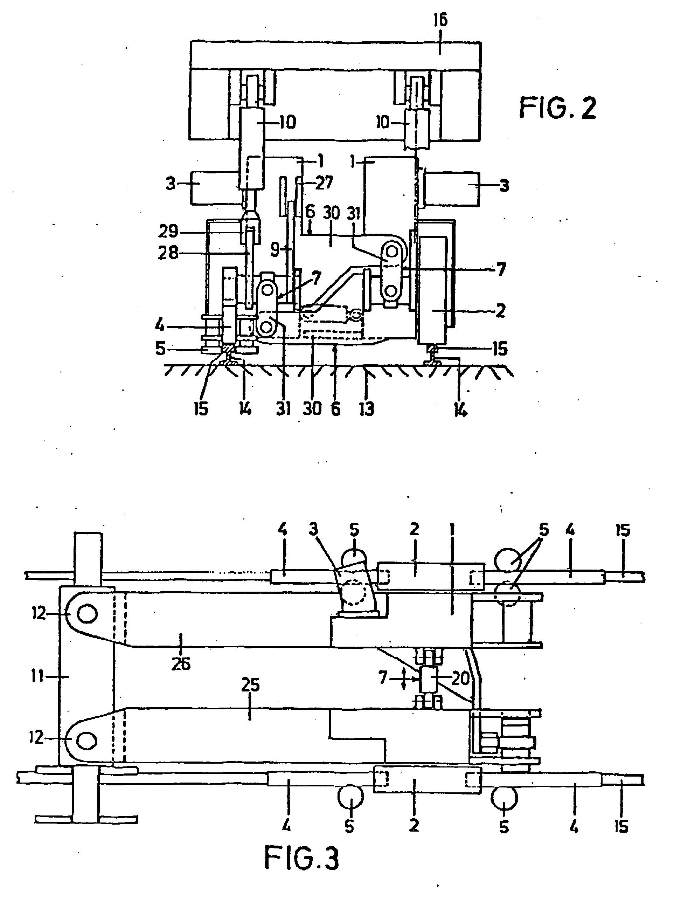

Aus Fig. 2 ist insbesondere die Ausbildung des spurweitentoleranzausgleichsmittels 7 ersichtlich, wobei Laschen 30 auf einer Fräsergehäuseabstützung 6 über Schwenkarme 31 mit dem Spurweitentoleranzausgleichsmittel 7 jeweils verbunden sind. Diese Spurweitentoleranzausgleichsmittel 7 weisen einen Zylinder 20 gemäß Fig. 3 auf, der im Normalfall die beiden Fräsereinheiten bezüglich der Gleislängsachse gleichmäßig nach rechts und links drückt. Dadurch wird ein sicheres Anlegen der jeweils innen seitlichen Führungsrollen 5 an die Schiene 14 bzw. an den Schienenkopf 15 ermöglicht. Aus Fig. 3 ist ferner ersichtlich, dass zur gleichzeitigen Bearbeitung zweier Schienenköpfe 15 zwei. Fräsereinheiten vorgesehen sind, die, wie bereits erwähnt, über Träger 25 und 26 und Gelenkzapfen 12 verschwenkbar mit den Schwenkbalken verbunden sind. Das Zusammenwirken der seitlichen Führungsrollen 5 mit dem Zylinder 20 und den Schwenkarmen 25, 26 ergibt eine sichere Führung der Fräsereinheiten auch bei Spurweiten-Toleranzen und beim Durchfahren von Kurven.

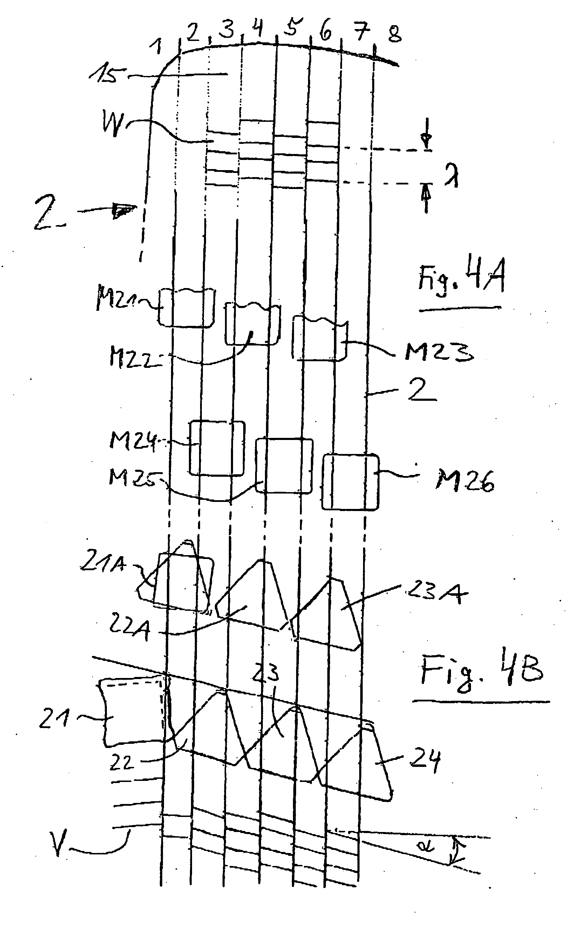

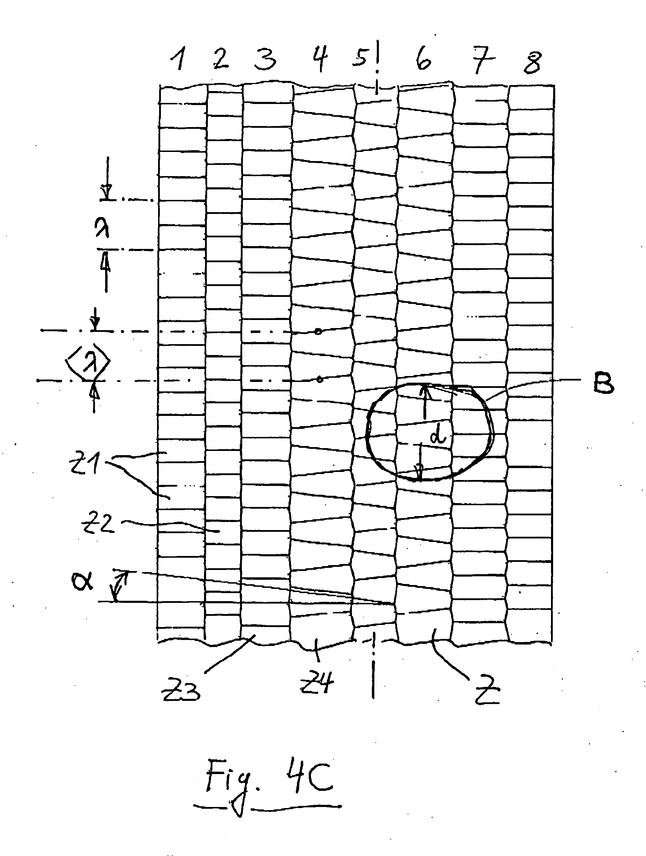

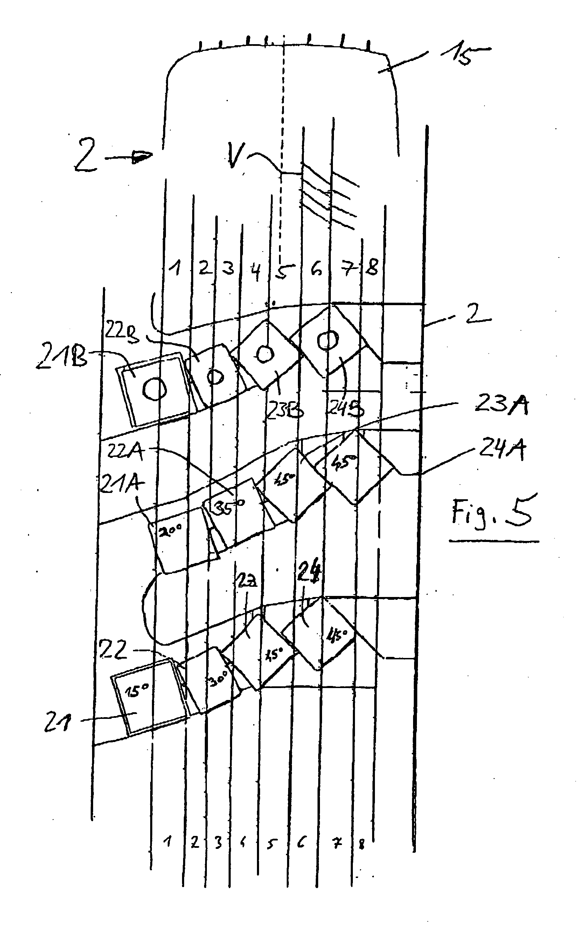

Der mehrspurige Fräsmesserkopf 2 weist, wie in Zusammenhang mit den Fig. 4 bis Fig. 7 noch näher erläutert wird, einen Satz von Messerkopfschneiden 21, 22, 23 und 24, sowie 21A, 22A, 23A und 24A, und 21B, 22B, 23B und 24B zum Fräsen der Schienenköpfe 15 auf, deren Profil sich aus annähernd kreisförmigen Teilbögen verschiedener Radien zusammensetzt, wobei jeder Teilbogen auf der Lauffläche der Gleischiene 15 eine Spur bildet, und der Fräsmesserkopf 2 so viele Schneiden 21, 22, usw. aufweist, wie Teilbögen bzw. Spuren des jeweiligen Schienenkopfes zu fräsen sind. In den Fig. 4 und 5 sind acht solcher Spuren vorgesehen und von 1 bis 8 nummeriert. Jeweils vier Messerkopfschneiden einer Reihe sind nebeneinan der angeordnet und fräsen die Spuren #1, #3, #5, und #7, das sind die Messerkopfschneiden 21, 22, 23 und 24, und übernächsten Schneiden 21B, 22B, 23B und 24B, danach kommen vier Messerkopfschneiden einer Reihe, welche die Spuren #2, #4, #6, und #8 fräsen, das sind 21A, 22A, 23A und 24A, und so fort. Fig. 4A zeigt schematisch zum Zwecke der Erläuterung der prinzipiellen Funktionsweise die Anordnung der Messerkopfschneiden bei einer anderen Vorrichtung mit einer geradlinigen, d. h. nicht geneigten Anordnung von Messern M21 bis M26, wobei das Messer M21 die Spur #2, M22 die Spur #4, usw. fräst. Das sich mit dieser Anordnung von Messerkopfschneiden M21 bis M26 ergebende Wellenmuster W ist in Fig. 4A oben schematisch dargestellt. Es ist zu erkennen, dass das Wellenmuster benachbarter Spuren um eine viertel "Wellenlänge" λ zueinander versetzt sind, was durch den Versatz der Messerkopfschneiden M21 bis M23 gegenüber den Schneiden M24 bis M26 eingestellt wird.

Fig. 4B zeigt nun grob schematisch die Verhältnisse bei dem erfindungsgemäßen Prinzip; die jeweils einer bestimmten Spur #1, #2, usw. des Schienenkopfprofiles zugeordneten MesserkoPfschneiden 21, 22, usw. sind dergestalt unter vorbestimmten Neigungen und/oder seitlich und/oder der Höhe nach zueinander versetzt auf dem Fräsmesserkopf 2 angeordnet, dass die Fräswellung V einer bestimmten Spur gegenüber der Laufrichtung um einen vorbestimmten Anstellwinkel α schräg verläuft. Hierbei ist vnn Vorteil des weiteren vorgesehen, dass der Anstellwinkel α der Fräswellung V für wenigstens eine einzelne Spur unterschiedlich ist gegenuber dem Anstellwinkel α einer anderen Spur. Bei dem in Fig. 4B dargestellten Ausführungsbeispiel der Erfindung ist dies der Fall für die Fräswellung der Spur #1, welche gegenüber den Fräswellungen der anderen Spuren #2, #3, usw einen anderen Anstellwinkel α besitzt, wobei der Anstellwinkel α der Fräswellung für die Spur #1 sogar in einer anderen Richtung gegenüber dem Anstellwinkel α der anderen Spuren #2, #3, usw verläuft.

In Fig. 4C ist in einer schematischen Daraufsicht ein weiteres Fraswellenbild Z einer nach der Erfindung gefrästen Gleisschiene 15 dargestellt. Die Fräswellung Z1 einer bestimmten Spur #1, usw. ist gegenüber der Fräswellung Z2 einer benachbarten Spur #2 um ein Viertel der Wellenlänge λ phasenversetzt, bzw. die Fräswellung Z2 z. B. der Spur #2, usw. hat eine (geringfügig) andere mittlere Wellenlange als etwa die Spur #1, und/oder die Fräswellung 24 der Spur #4 ist wechselweise in ihrer Laufrichtung um einen vorbestimmten Anstellwinkel α schräg ausgebildet. Die halbe (mittlere) Wellenlänge λ/2 der Fräswellung Z1, Z2, Z3, usw. einer Spur beträgt etwa 2 bis 3 mm, insbesondere etwa 2,5 mm, und die Amplitude der Wellung einer Spur ist kleiner oder gleich als etwa 0,002 mm (2 µm), und insbesondere kleiner oder gleich als etwa 0,001 mm (1 µm). Im Falle von schräg verlaufenden Wellungen bezieht sich der Begriff Wellenlänge auf den durch die Mitte einer Wellung gemessenen Mittelwert. In jedem Fall ist von Vorteil vorgesehen, dass die Wellenlänge der Fräswellung einer Spur kleiner oder gleich ist zum kleineren Durchmesser der (in Fig. 4C nur schematisch angedeuteten) Berührlinse B einer auf den Schienen 15 fahrenden Zugmaschine. Die Berührlinse B hat typischerweise eine ellipLische Form mit einem kleineren Durchmesser d. Dem Prinzip der Erfindung folgend ist daher von Vorteil vorgesehen, wenn die Wellenlänge λ der Fräswellung einer Spur #1, #2, usw. kleiner oder gleich ist zum kleinerer Durchmesser d der Berührlinse B einer auf den Schienen 15 fahrenden Zugmaschine.

Bei dem in Fig. 5 dargestellten bevorzugten Ausführungsbeispiel der Erfindung beträgt der Anstellwinkel α der Fräswellung für wenigstens eine einzelne Spur mindestens etwa 10° bis 15°. Bei der dargestellten Ausführung der Erfindung werden solche Anstellwinkel α der Fräswellung V nun dadurch erreicht, dass die den einzelenen Spuren zugeordneten Messerschneiden unter einem Sitzwinkel von 10° bis etwa 45° gegen-über RadaChsenrichtung in den Sitzen S des Fräsmesserkopfes 2 angeordnet sind, und zwar beträgt der Sitzwinkel der Mes serschneide 21 der randseitigen ersten Spur etwa 15°, der Sitzwinkel der Messerschneide 22 der übernächsten dritten Spur etwa 30°, der Sitzwinkel der Messerschneide 23 und 24 der übernächsten fünften und siebten Spur etwa 45°. Bei der benachbarten Reihe beträgt der Sitzwinkel der Messerschneide 21A der zweiten Spur etwa 20°, der Sitzwinkel der Messerschneide 22A der übernächsten vierten Spur etwa 35°, und der Sitzwinkel der Messerschneiden 23A und 24A der übernächsten sechsten und achten Spur etwa 45°.

Bei dem Ausführungsbeispiel sind darüber hinaus die jeweils unterschiedlichen Spuren der dem Schienenkopfprofilen zugordneten Messerkopfschneiden 21, 22, usw. seitlich versetzt zueinander auf dem Fräsmesserkopf 2 angeordnet.

Von Vorteil sind als Messerkopfschneiden 21, 22, usw. auswechselbare Wendeplatten vorgesehen, wobei die Wendeschneideplatten eine annähernd viereckige, insbesondere quadratische Grundfläche haben, und im Fräsmesserkopf 2 entsprechend ausgebildete Sitze S zur Aufnahme der Schnittkräfte ausgebildet sind.

Der Fräsvorgang wird zunächst dadurch eingeleitet, dass auf einer Schienenlänge von einigen Metern die Fräsereinheit langsam auf die entsprechende Schnittlinie abgesenkt wird. Dies geschieht durch Einfahren des Zylinders 19 der Schnitttiefenexzenterverstellung 9 auf eine vorher eingestellte Schnitttiefe mit Hilfe der Einrichtung 8. Der angefedert aufliegende (linke) Gleitschuh 4 rückt entsprechend nach und der Fräsvorgang kann beginnen und mit der erwünschten bzw. erforderlichen Schnitttiefe über die jeweils zu bearbeitende Schienenlänge durchgeführt werden.

Der Fahrgestellrahmen 16 kann Teil eines gezogenen Fahrgestelles sein oder aber auch eines selbstfahrenden Fahrzeuggcstelles 17. Dazu können an sich bekannte Antriebsmittel verwendet werden, die daher nicht dargestellt sind. Ferner kann die Einheit als selbstfahrende Einheit ausgebildet ein in Form einer Lokomotive, die die Antriebsmittel für das Fahrwerk, die Versorgungsmittel für den Fräserkopfantriebsmotor und zur Betätigung der Hubzylinder und anderen Verstellmitteln trägt.

## Patentansprüche

1. Verfahren zum Fräsen von Schienenköpfen (15) der in einer Bettung (13) angeordneten Gleisschienen (14), mit einem rotierend angetriebenen Fräsmesserkopf (2), der in einem einen Fräsmesserkopfantrieb (3) enthaltenden Fahrwerk gelagert und mit Mitteln zur Führung des Fräsmesserkopfes (2) der Höhe und/oder der Seite nach zusammenwirkt, wobei der Fräsmesserkopf (2) einen Satz von Messerkopfschneiden (21 bis 24) zum Fräsen der Schienenköpfe (15) aufweist, deren Profil sich aus annähernd kreisförmigen Teilbögen verschiedener Radien zusammensetzt, wobei jeder Teilbogen auf der Lauffläche der Gleischiene (14) eine Spur (#1 bis #8) bildet, und de= Fräsmesserkopf (2) so viele Schneiden aufweist, wie Teilbögen bzw. Spuren (#1 bis #8) des jeweiligen Schienenkopfes (2) zu fräsen sind, **dadurch gekennzeichnet, dass** die jeweils einer bestimmten Spur (#1 bis #8) des Schienenkopfprofiles zugeordneten Messerkcpfschneiden (21 bis 24) dergestalt unter vorbestimmten Neigungen und/oder seitlich und/oder der Höhe nach zueinander versetzt auf dem Fräsmesserkopf (2) angeordnet werden, dass die Fräswellung einer bestimmten Spur (#1 bis #8) gegenüber der Fräswellung einer benachbarten Spur (#1 bis #8) phasenversetzt ist, wobei die Wellenlänge (λ) der Fräswellung einer Spur (#1 bis #8) kleiner oder gleich ist zum kleineren Durchmesser (d) der Berührlinse (B) einer auf der Schienen (15) fahrenden Zugmaschine, d. h. die halbe Wellenlänge (λ/2) der Fräswellung einer Spur (#1 bis #8) beträgt etwa 2 bis 3 mm, insbesondere etwa 2,5 mm.

2. Verfahren zum Fräsen von Schienenköpfen (15) der in einer Bettung (13) angeordneten Gleitschienen (14), mit einem rotierend angetriebenen Fräsmesserkopf (2), der in einem einen Fräsmesserkopfantrieb (3) enthaltenden Fahrwerk gelagert und mit Mitteln zur Führung des Fräsnesserkopfes (2) der Höhe und/oder der Seite nach zusammenwirkt, wobei der Frasmesserkopf (2) einen Satz von Messerkopfschneiden (21 bis 24) zum Fräsen der Schienenköpfe (15) aufweist, deren Profil sich aus annähernd kreisförmigen Teilbögen verschiedener Radien zusammensetzt, wobei jeder Teilbogen auf der Lauffläche der Gleischiene (14) eine Spur (#1 bis #8) bildet, und der Fräsmesserkopf (2) so viele Schneiden aufweist, wie Teilbögen bzw. Spuren (#1 bis #8) des jeweiligen Schienenkopfes (2) zu fräsen sind, **dadurch gekennzeichnet, dass** die jeweils einer bestimmten Spur (#1 bis #8) des Schienenkopfprofiles zugeordneten Messerkopfschneiden (21 bis 24) dergestalt unter vorbestimmten Neigungen und/oder seitlich und/oder der Höhe nach zueinander versetzt auf dem Fräsmesserkopf (2) angeordnet werden, dass die Fräswellung einer bestimmten Spur (#1 bis #8) gegenüber der Fräswellung einer benachbarten Spur (#1 bis #8) eine andere mittlere Wellenlänge aufweist, wobei die Wellenlänge (λ) der Fräswellung einer Spur (#1 bis #8) kleiner oder gleich ist zum kleineren Durchmesser (d) der Berührlinse (B) einer auf den Schienen (15) fahrenden Zugmaschine, d. h. die halbe Wellenlänge (λ/2) der Fräswellung einer Spur (#1 bis #8) beträgt etwa 2 bis 3 mm, insbesondere etwa 2,5 mm.

3. Verfahren zum Fräsen von Schienenköpfen (15) der in einer Bettung (13) angeordneten Gleisschienen (14), mit einem rotierend angetriebenen Fräsmesserkopf (2), der in einem einen Fräsmesserkopfantrieb (3) enthaltenden Fahrwerk gelagert und mit Mitteln zur Führung des Fräsmesserkopfes (2) der Höhe und/oder der Seite nach zusammenwirkt, wobei der Fräsmesserkopf (2) einen Satz von Messerkopfschneiden (21 bis 24) zum Fräsen der Schienenköpfe (15) aufweist, deren Profil sich aus annähernd kreisförmigen Teilbögen verschiedener Radien zusammensetzt, wobei jeder Teilbogen auf der Lauffläche der Gleischiene (14) eine Spur (#1 bis #8) bildet, und der Fräsmesserkopf (2) so viele Schneiden aufweist, wie Teilbögen bzw. Spuren (#1 bis #8) des jeweiligen Schienenkopfes (2) zu fräsen sind, **dadurch gekennzeichnet, dass** die jeweils einer bestimmten Spur (#1 bis #8) des Schienenkopfprofiles zugeordneten Messerkopfschneiden (21 bis 24) dergestalt unter vorbestimmten Neigungen und/oder seitlich und/oder der Höhe nach zueinander versetzt auf dem Fräsmesserkopf (2) angeordnet werden, dass die Fräswellung einer bestimmten Spur (#1 bis #8) gegenüber der Fräswellung einer benachbarten Spur (#1 bis #8) in ihrer Laufrichtung (A) um einer vorbestimmten Anstellwinkel (α) schräg ausgebildet ist, wobei die Wellenlänge (λ) der Fräswellung einer Spur (#1 bis #8) kleiner oder gleich ist zum kleineren Durchmesser (d) der Berührlinse (B) einer auf den Schienen (15) fahrenden Zugmaschine, d. h. die halbe Wellenlänge (λ/2) der Fräswellung einer Spur (#1 bis #8) beträgt etwa 2 bis 3 mm, insbesondere etwa 2,5 mm.

4. Verfahren nach Anspruch 1, 2 oder 3, **dadurch gekennzeichnet, dass** die Amplitude der Wellung einer Spur (#1 bis #8) kleiner oder gleich ist als etwa 0,002 mm (2 µm), und insbesondere kleiner oder gleich ist als etwa 0,001 mm (1 µm).

5. Verfahren nach einem der vorhergehenden Ansprüche, **dadurch gekennzeichnet, dass** der Anstellwinkel der Fräswellung für wenigstens eine einzelne Spur (#1 bis #8) unterschiedlich ist gegenüber dem Anstellwinkel (α) einer anderen Spur (#1 bis #8).

6. Verfahren nach einem der vorhergehenden Ansprüche, **dadurch gekennzeichnet, dass** der Anstellwinkel (α) der Fräswellung für wenigstens eine einzelne Spur (#1 bis #8) in einer anderen Richtung gegenüber dem Anstellwinkel (α) einer anderen Spur (#1 bis #8) verläuft, wobei der Anstellwinkel (α) der Fräswellung für wenigstens eine einzelne Spur (#1 bis #8) mindestens 10° bis etwa 15° beträgt.

7. Verfahren nach einem der vorhergehenden Ansprüche, **dadurch gekennzeichnet, dass** die den jeweils unterschiedlichen Spuren (#1 bis #8) des Schienenkopfprofiles zugordneten Messerkopfschneiden (21, 22, 23, 24) unter einem vorbestimmten Sitzwinkel auf dem Fräsmesserkopf (2) angeordnet sind.

8. Verfahren nach einem der vorhergehenden Ansprüche, **dadurch gekennzeichnet, dass** die den jeweils unterschiedlichen Spuren (#1 bis #8) des Schienenkopfprofiles zugordneten Messerkopfschneiden darüber hinaus seitlich versetzt zueinander auf dem Fräsmesserkopf (2) angeordnet sind.

9. Verfahren nach einem der vorhergehenden Ansprüche, **dadurch gekennzeichnet, dass** als Messerkopfschneiden (21, 22, 23, 24) auswechselbare Wendeplatten vorgesehen sind, wobei die Wendeschneideplatten (21, 22, 23, 24) eine annähernd viereckige, insbesondere quadratische Grundfläche haben, und im Fräsmesserkopf (2) entsprechend ausgebildete Sitze (S) zur Aufnahme der Schnittkräfte ausgebildet sind.

10. Verfahren nach einem der vorhergehenden Ansprüche, **dadurch gekennzeichnet, dass** der Fräsmesserkopf in einem Fahrgestellrahmen (16) eingebaut ist, der von einer Zugmaschine bewegt wird.

11. Verfahren nach einem der vorhergehenden Ansprüche, **dadurch gekennzeichnet, dass** das Fahrgestell Teil einer selbstfahrenden Lokomotive oder Zugmaschine ist, und die Fräsereinheit etwa in Längsmitte der zugmaschine bzw. Lokomotive angeordnet ist.

## Claims

1. Process for milling of rail heads (15) of railway tracks (14) placed in a track bed (13), with a rotatable driven milling cutter head (2) that is arranged in a carrier unit containing a milling cutterhead drive (3) and that is interacting in height and/or lateral with a mean for guiding of the milling cutterhead (2), said milling cutterhead (2) comprising a set of cutterhead cutting tips (21 to 24) for milling of said rail heads (15), those profile is made up of nearly circular partial curves of different radii, whereby each partial curve forms a track (#1 to #8) on the running surface of the rail (14), and said milling cutterhead (2) comprising as many cutting tips as partial curves and/or tracks (#1 to #8) of the relevant rail head (2) have to be milled, **characterized in that** said cutterhead cutting tips (21 to 24) respectively dedicated to a certain track (#1 to #8) of the rail head profile are arranged offset under preset inclinations and/or in lateral and/or in height to one another on said milling cutterhead (2), such that the milling ripple of a certain track (#1 to #8) is dephased in relation to the milling ripple of a neighboured track (#1 to #8), whereby the wave length (λ) of a milling ripple of a track (#1 to #8) is smaller or equal to the smaller diameter (d) of the contact lens (B) of a traction engine running on the rails (15), and in particular the half wave length (λ/2) of the milling ripple of a track (#1 to #8) is about 2 up to 3 mm, particularly about 2.5 mm.

2. Process for milling of rail heads (15) of railway tracks (14) placed in a track bed (13), with a rotatable driven milling cutter head (2) that is arranged in a carrier unit containing a milling cutterhead drive (3) and that is interacting in height and/or lateral with a mean for guiding of the milling cutterhead (2), said milling cutterhead (2) comprising a set of cutterhead cutting tips (21 to 24) for milling of said rail heads (15), those profile is made up of nearly circular partial curves of different radii, whereby each partial curve forms a track (#1 to #8) on the running surface of the rail (14), and said milling cutterhead (2) comprising as many cutting tips as partial curves and/or tracks (#1 to #8) of the relevant rail head (2) have to be milled, **characterized in that** said cutterhead cutting tips (21 to 24) respectively dedicated to a certain track (#1 to #8) of the rail head profile are arranged offset under preset inclinations and/or in lateral and/or in height to one another on said milling cutterhead (2), such that the milling ripple of a certain track (#1 to #8) comprises a different mean wavelength in relation to the milling ripple of a neighboured track (#1 to #8), whereby the wave length (λ) of a milling ripple of a track (#1 to #8) is smaller or equal to the smaller diameter (d) of the contact point (B) of a traction engine running on the rails (15), and in particular the half wave length (λ/2) of the milling ripple of a track (#1 to #8) is about 2 up to 3 mm, particularly about 2.5 mm.

3. Process for milling of rail heads (15) of railway tracks (14) placed in a track bed (13), with a rotatable driven milling cutter head (2) that is arranged in a carrier unit containing a milling cutterhead drive (3) and that is interacting in height and/or lateral with a mean for guiding of the milling cutterhead (2), said milling cutterhead (2) comprising a set of cutterhead cutting tips (21 to 24) for milling of said rail heads (15), those profile is made up of nearly circular partial curves of different radii, whereby each partial curve forms a track (#1 to #8) on the running surface of the rail (14), and said milling cutterhead (2) comprising as many cutting tips as partial curves and/or tracks (#1 to #8) of the relevant rail head (2) have to be milled, **characterized in that** said cutterhead cutting tips (21 to 24) respectively dedicated to a certain track (#1 to #8) of the rail head profile are arranged offset under preset inclinations and/or in lateral and/or in height to one another on said milling cutterhead (2), such that the milling ripple of a certain track (#1 to #8) is inclined in its running direction (A) by a certain set angle (α) in relation to the milling ripple of a neighboured track (#1 to #8), whereby the wave length (λ) of a milling ripple of a track (#1 to #8) is smaller or equal to the smaller diameter (d) of the contact point (B) of a traction engine running on the rails (15), and in particular the half wave length (λ/2) of the milling shadow of a track (#1 to #8) is about 2 up to 3 mm, particularly about 2.5 mm.

4. Process according to claim 1, 2 or 3, **characterized in that** the amplitude of said ripple of a track (#1 to #8) is smaller or equal than about 0,002 mm (2 µm), and in particular is smaller or equal than about 0,001 mm (1 µm).

5. Process according to one of the previous claims, **characterized in that** the set angle of the milling ripple for at least one single track (#1 to #8) differs in the set angle (α) of another track (#1 to #8).

6. Process according to one of the previous claims, **characterized in that** the set angle (α) of the milling ripple for at least one single track (#1 to #8) takes course to another direction opposite to the set angle of another track (#1 to #8), whereby the set angle (α) of the milling ripple is for at least one single track (#1 to #8) minimum 10° up to about 15°.

7. Process according to one of the previous claims, **characterized in that** the cutterhead cutting tips (21, 22, 23, 24), dedicated to the respective different tracks (#1 to #8) of the rail head profile, are arranged on the milling cutterhead (2) according to a predetermined seat angle.

8. Process according to one of the previous claims, **characterized in that** the cutterhead cutting tips dedicated to the respective different tracks (#1 to #8) of the rail head profile are arranged laterally offset to one another on the milling cutterhead (2).

9. Process according to one of the previous claims, **characterized in that** as cutterhead cutting tips (21, 22, 23, 24) changeable turnover tips are provided, whereby the turnover cutting tips (21, 22, 23, 24) are having a roughly square, particularly quadratic base area, and corresponding formed seats (S) are provided in the cutterhead (2) for adoption of cutting forces.

10. Process according to one of the previous claims, **characterized in that** the milling cutterhead is mounted in a carrier unit (16) moved by a traction engine.

11. Process according to one of the previous claims, **characterized in that** the carrier unit is part of a self-propelled locomotive or traction engine and the milling unit is arranged approximately in the alongside center of the traction engine and/or locomotive.

## Revendications

1. Procédé de fraisage des champignons de rails (15) des voies ferrées (14) reposant sur du ballast (13) à l'aide d'un porte-outil de fraisage (2) à commande rotative, logée dans un carter dans lequel se trouve également l'entraînement (3) de cette tête de fraisage, il y a interagissement avec une système de guidage de la tête de fraisage (2) en hauteur et/ou latéralement, la tête de fraisage (2) est équipée d' un jeux d'arêtes coupantes (21 à 24) pour le fraisage des champignons de rails (15); leur profil décrit des courbes partielles quasi circulaires avec des rayons différents, chaque courbe partielle provoque une trace (#1 à #8) sur la surface de roulement de rail (14), la tête de fraisage (2) comporte une quantité d'arêtes coupantes égale à la quantité de courbes partielles et/ou de traces (#1 à #8) de chaque champignon de rail (2) qui est à fraiser,
**caractérisé en ce que** les arêtes coupantes (21 à 24) correspondant à une certaine trace (#1 à #8) du profil de champignon de rail sont montées sur la tête de fraisage (2) sous des inclinaisons prédéfinies et d'une façon décalée l'une par rapport à l'autre latéralement et/ou en hauteur de sorte que l'onde d'usinage d'une certaine trace (#1 à #8) par rapport à l'onde d'usinage d'une trace avoisinante (#1 à #8) soit déphasée, la longueur d'onde (λ) d'usinage d'une trace (#1 à #8) est inférieure ou égale au plus petit diamètre (d) d'une lentille de contact (B) d'un véhicule tracteur roulant sur les voies (15), c'est-à-dire la moitié de la longueur d'onde (λ/2) de l'onde d'usinage d'une trace (#1 à #8) est de 2 à 3 mm, notamment environ 2,5 mm.

2. Procédé de fraisage des champignons de rails (15) des voies ferrées (14) reposant sur du ballast (13) à l'aide d'un porte-outil de fraisage (2) à commande rotative, logée dans un carter dans lequel se trouve également l'entraînement (3) de cette tête de fraisage, il y a interagissement avec une système de guidage de la tête de fraisage (2) en hauteur et/ou latéralement, la tête de fraisage (2) est équipée d'un jeux d'arêtes coupantes (21 à 24) pour le fraisage des champignons de rails (15); leur profil décrit des courbes partielles quasi circulaires avec des rayons différents, chaque courbe partielle provoque une trace (#1 à #8) sur la surface de roulement de rail (14), la tête de fraisage (2) comporte une quantité d'arêtes coupantes égale à la quantité de courbes partielles et/ou de traces (#1 à #8) de chaque champignon de rail (2) qui est à fraiser,
**caractérisé en ce que** les arêtes coupantes (21 à 24) correspondant à une certaine trace (#1 à #8) du profil de champignon de rail sont montées sur la tête de fraisage (2) sous des inclinaisons prédéfinies et d'une façon décalée l'une par rapport à l'autre latéralement et/ou en hauteur de sorte que l'onde d'usinage d'une certaine trace (#1 à #8) par rapport à l'onde d'usinage d'une trace avoisinante (#1 à #8) ait une autre longueur d'onde moyenne, la longueur d'onde (λ) d'usinage d'une trace (#1 à #8) est inférieure ou égale au plus petit diamètre (d) d'une lentille de contact (B) d'un véhicule tracteur roulant sur les voies (15), c'est-à-dire la moitié de la longueur d'onde (λ/2) de l'onde d'usinage d'une trace (#1 à #8) est de 2 à 3 mm, notamment environ 2,5 mm.

3. Procédé de fraisage des champignons de rails (15) des voies ferrées (14) reposant sur du ballast (13) à l'aide d'un porte-outil de fraisage (2) à commande rotative, logée dans un carter dans lequel se trouve également l'entraînement (3) de cette tête de fraisage, il y a interagissement avec une système de guidage de la tête de fraisage (2) en hauteur et/ou latéralement, la tête de fraisage (2) est équipée d'un jeux d'arêtes coupantes (21 à 24) pour le fraisage des champignons de rails (15); leur profil décrit des courbes partielles quasi circulaires avec des rayons différents, chaque courbe partielle provoque une trace (#1 à #8) sur la surface de roulement de rail (14), la tête de fraisage (2) comporte une quantité d'arêtes coupantes égale à la quantité de courbes partielles et/ou de traces (#1 à #8) de chaque champignon de rail (2) qui est à fraiser,
**caractérisé en ce que** les arêtes coupantes (21 à 24) correspondant à une certaine trace (#1 à #8) du profil de champignon de rail sont montées sur la tête de fraisage (2) sous des inclinaisons prédéfinies et d'une façon décalée l'une par rapport à l'autre latéralement et/ou en hauteur de sorte que l'onde d'usinage d'une certaine trace (#1 à #8) par rapport à l'onde d'usinage d'une trace avoisinante (#1 à #8) soit dans sons sens de marche (A) en biais sous un angle d'incidence prédéterminé (α), la longueur d'onde (λ) d'usinage d'une trace (#1 à #8) est inférieure ou égale au plus petit diamètre (d) d'une lentille de contact (B) d'un véhicule tracteur roulant sur les voies (15), c'est-à-dire la moitié de la longueur d'onde (λ/2) de l'onde d'usinage d'une trace (#1 à #8) est de 2 à 3 mm, notamment environ 2,5 mm.

4. Procédé selon revendication 1, 2 ou 3, **caractérisé en ce que** l'amplitude de l'onde d'usinage d'une trace (#1 à #8) est inférieure ou égale à environ 0,002 mm (2 µm), et notamment inférieure ou égale à environ 0,001 mm (1 µm).

5. Procédé selon une des revendications précédentes, **caractérisé en ce que** l'angle d'incidence de l'onde d'usinage pour au moins une seule trace (#1 à #8) diffère de l'angle d'incidence (α) d'une autre trace (#1 à #8).

6. Procédé selon une des revendications précédentes, **caractérisé en ce que** l'angle d'incidence (α) de l'onde d'usinage pour au moins une seule trace (#1 à #8) va dans une autre direction par rapport à l'angle d'incidence (α) d'une autre trace (#1à #8), l'angle d'incidence (α) de l'onde d'usinage au moins d'une seule trace (#1 à #8) s'élève pourtant au minimum à 10° jusqu'à environ 15°.

7. Procédé selon une des revendications précédentes, **caractérisé en ce que** les arêtes coupantes (21, 22, 23, 24) destinées aux différentes traces (#1 à #8) sur le profil de champignon de rail sont positionnées sur la tête de fraisage (2) sous un angle de logement prédéfini.

8. Procédé selon une des revendications précédentes, **caractérisé en ce que** les arêtes de coupe destinées aux différentes traces (#1 à #8) du profil de champignon de rail sont en plus montées sur la tête de fraisage (2) d'une façon latéralement décalée l'une par rapport à l'autre.

9. Procédé selon une des revendications précédentes, **caractérisé en ce que** comme arêtes de coupe (21, 22, 23, 24) des plaquettes amovibles sont utilisées, ces plaquettes (21, 22, 23, 24) ont une surface de base presque quadrangulaire, avant tout carrée, des logements spécialement formés (S) sont conçus pour la porte-forces de coupe.

10. Procédé selon une des revendications précédentes, **caractérisé en ce que** la tête de fraisage logée dans un carter (16) est bougée au moyen d'un mototracteur.

11. Procédé selon une des revendications précédentes, **caractérisé en ce que** le carter fait partie d'un locomotive automoteur ou d'un véhicule tracteur et l'unité de fraisage est positionnée au centre longitudinal du véhicule tracteur ou bien de la locomotive.
